Europäisches Patentamt

European Patent Office

Office européen des brevets

(11) Publication number: **0 145 796**
**B1**

(12) EUROPEAN PATENT SPECIFICATION

(45) Date of publication of patent specification: **19.11.87**

(51) Int. Cl.⁴: **F 02 B 19/02, F 02 B 19/10**

(21) Application number: **83112133.0**

(22) Date of filing: **02.12.83**

(54) Internal combustion engine with large fuel tolerance.

(43) Date of publication of application:
**26.06.85 Bulletin 85/26**

(45) Publication of the grant of the patent:
**19.11.87 Bulletin 87/47**

(84) Designated Contracting States:
**CH DE FR GB IT LI NL SE**

(56) References cited:
**WO-A-83/00529**
**DE-A-2 851 504**
**DE-A-2 928 021**
**GB-A-2 031 513**
**US-A-4 372 264**

(73) Proprietor: **Baranescu, George Stan**
**5316 Howard Avenue**
**Western Springs Illinois 60558 (US)**

(72) Inventor: **Baranescu, George Stan**
**5316 Howard Avenue**
**Western Springs Illinois 60558 (US)**

(74) Representative: **Weinmiller, Jürgen**
**Lennéstrasse 9 Postfach 24**
**D-8133 Feldafing (DE)**

Courier Press, Leamington Spa, England.

## Description

The invention relates to an internal combustion engine having the capability to operate with a wide variety of fuels, using one fuel at a time.

The existing solutions for achieving fuel tolerance of internal combustion engines so that the engine can operate with one fuel at a time, use fuel injection during combustion and a compression ratio which favors self-ignition of the fuel-air mixture. The start of combustion, which is critical for a fuel tolerant engine, is achieved by several methods like spark assistance, ignition on hot surface, the control of air parameters at the beginning of fuel injection, or ignition on a catalytic mesh.

Better results have been obtained with spark assisted engines. In these engines, the entire fuel charge is injected either into an open combustion chamber, or into a separate combustion chamber, and the fuel-air mixture is spark ignited. Most of these engines use a nozzle located close to a spark plug, and so oriented that part of the fuel plume flows between the spark plug electrodes. Some variants of these engines use fuel vaporization on the combustion chamber wall prior to spark ignition.

The spark assisted engines achieve a certain fuel tolerance, especially insensitivity to fuel knock resistance. However, these engines have significant weaknesses, most of them resulting from 1) the spark release in a heterogeneous mixture, which is not favorable for spark ignition; 2) the small and spatially fixed ignition zone ensured by a spark plug; 3) the design constraints adopted for lowering the engine sensitivity to some fuel characteristics. Usually the spark assisted engines are highly sensitive to fuel volatility and to injection rate, need fuels having certain self-ignition ability, and have very high hydrocarbon emission at low loads. The variants with fuel vaporization on combustion chambers wall are less sensitive to fuel volatility, but need fuels having certain knock resistance, and their operation worsens at low loads.

Another variant of spark assisted engine is described in the U.S. Patent No. 4 372 264. The engine is provided with an open combustion chamber and a separate combustion chamber, the connection between the two combustion chambers being controlled by a valve mechanically actuated. The valve is closed during mid compression stroke. The fuel charge is integrally injected into the separate combustion chamber, where it vaporizes due to high temperature of the combustion gases trapped in this chamber at the closing of the control valve. During the compression stroke the control valve is opened which allows the vaporized fuel to flow from the separate into the open combustion chamber. The fuel-air mixture achieved into the open combustion chamber is spark ignited.

The operation of the above described engine has several drawbacks. The timing of the control valve being invariable, the gas pressure in the open combustion chamber at the opening of the control valve is practically the same at any operating regime of the engine. The pressure of the combustion gases trapped in the separate combustion chamber depends mostly on engine load: the lower the load, the lower the pressure of those gases. If the timing of the control valve is chosen to achieve the engine operation as described for a selected load, at a lower load the pressure in the separate combustion chamber can be lower than in the open combustion chamber at the opening of the control valve. Consequently the vaporized fuel will be discharged from the separate into the open combustion chamber only in the expansion stroke. Even if spark ignition is provided at that time the combustion will be slow, late, and incomplete, which considerably increases the specific fuel consumption and emissions. There is no timing of the control valve which can ensure a satisfactory engine operation. For example if the timing of the control valve is chosen for achieving the operation as described at the lowest load, the discharge of vaporized fuel from the separate combustion chamber occurs too early in the compression stroke, which may generate uncontrolled combustion. A closing of the control valve early in the expansion stroke will increase the temperature of the control valve, as well as the specific fuel consumption, since the thermal energy of the gases trapped in the separate combustion chamber is not transformed in work during the expansion stroke.

Because the control valve is opened when the pressure in open combustion chamber has a certain value, a portion of the fuel charge, as well as a portion of the residual gases, remain in the separate combustion chamber. The ignition and combustion of that fuel portion requires an amount of air from the open combustion chamber which can ensure a concentration of oxygen higher than the stoichrometric one, to compensate the inhibiting effect of the residual combustion gases. As a result the combustion gases generated by the combustion of the fuel remained in separate combustion chamber will contain oxygen. The oxygen concentration in the separate combustion chamber will increase if a subsequent flow from the open combustion chamber occurs. Thus, the combustion gases trapped in the separate combustion chamber contain oxygen, which can generate uncontrolled combustion of the fuel injected in this chamber.

Due to the above circumstances the engine will have unsatisfactory operation.

The fuel tolerance achieved by a hot surface of the combustion chamber is limited to some fuels, like alcohols, which have low resistance to preignition. Even with such fuels the hot surface becomes ineffective at high speed and low load.

The control of air parameters at the beginning of fuel injection for allowing the operation of diesel engine with fuels having low self-ignition property is achieved mostly by increasing the compression ratio, heating the intake air, and by supercharging. The fuel tolerance ensured by these methods includes only fuels having high volatility and not very low self-ignition property. Additionally the methods increase the mechanical losses and decreases the volumetric efficiency when supercharging is not provided.

Another method for the control of air parameters at the beginning of fuel injection is shown in the U.S. Patent No. 4 372 264 previously cited. The method consists in a mode of operation of the engine described in that patent different from the method commented earlier. Only a portion of the fuel charge is injected into the combustion gases trapped in the separate chamber during the expansion stroke. The control valve is opened during the compression stroke when the pressure in open combustion chamber is higher than the pressure in separate combustion chamber. As a result an amount of air flows into the separate combustion chamber, where it mixes with the vaporized fuel. The mixture is spark ignited, and the resulting combustion gases are ejected into the open combustion chamber, which generates an increase of temperature and pressure in this chamber. When most of the fuel charge of separate combustion chamber has been burnt the remaining portion of the fuel charge is injected into the open combustion chamber, where it self-ignites due to the high temperature of the fresh charge of this chamber.

The operation of the engine as described is based on the assumption that no combustion occurs in the separate combustion chamber before spark ignition, due to the lack of oxygen in this chamber. The assumption is not valid. As previously shown the combustion gases of separate combustion chamber contain oxygen, since the ignition and combustion in this chamber require a high oxygen concentration. Additionally, the second mode of operation of the engine increases the oxygen concentration in separate combustion chamber. Because the engine operates in open combustion chamber with a heterogeneous fuel-air mixture, a significant air excess is necessary at full load to ensure the complete combustion of the fuel. The air excess increases as the load decreases since the air intake is unthrottled. The control valve being fully opened during combustion, a gas flow from the open combustion chamber to the separate combustion chamber occurs after the start of combustion in the open combustion chamber. Therefore the combustion gases trapped in the separate combustion chamber during the expansion stroke contain oxygen; the lower the engine load, the higher the oxygen content of these gases.

The temperature of the oxygen trapped in the separate combustion chamber is high. This chamber has hot surfaces like the head of the control valve and a portion of the valve stem. The fuel charge of the separate combustion chamber has a long residence in this chamber, about 450 crankangle degrees. These circumstances generate an early and uncontrolled combustion in the separate combustion chamber. Consequently the engine cannot operate over the load range as described in the cited patent.

Ignition on a catalytic mesh included in the combustion chamber has low potential for increasing the fuel tolerance of internal combustion engines, mostly because of the negative effect of the catalytic mesh on the air motion.

The object of the invention as claimed is an internal combustion engine having the capacity to operate with a large variety of fuels, using one fuel at a time. This capacity, as well as other advantages, are achieved by special configurations of the engine, associated with new methods of operation.

Each cylinder of the engine is provided with an open combustion chamber, and a separate combustion chamber. These chambers are connected by a channel. Each combustion chamber is provided with a nozzle, connected to its own injection system, which delivers at selected moments a metered amount of fuel into the respective chamber. The separate combustion chamber is also provided with a spark plug connected to a spark ignition system. The connection between the two combustion chambers is controlled by a valve, provided with a spring whose force acts against valve opening. This valve, called further control valve, is actuated by means which ensure the valve opening and closing at selected moments situated between late expansion stroke and late compression stroke. During combustion and expansion the control valve is opened/closed by the pressure difference between the combustion chambers. In this section of the working cycle the control valve operates as a pressure relief valve.

A portion of the fuel charge is injected first into the separate combustion chamber. This injection starts in a selected moment situated between late expansion stroke and early compression stroke. The control valve is opened in a selected moment situated before, during, or after fuel injection into the separate combustion chamber. This valve is closed during compression stroke when the gas pressure in the separate combustion chamber has reached a selected value. Further, the compression process continues only in engine cylinder. When combustion shall start the fuel-air mixture of separate combustion chamber is spark ignited. Due to combustion progression, the gas pressure in separate combustion chamber increases. When the pressure different between the two combustion chambers generates a force higher than the force of the valve spring the control valve opens like a pressure relief valve, and burning gases are ejected from the separate combustion chamber into the open combustion chamber. The fuel charge of open combustion chamber is injected into the incoming burning gases, which ensures a fast ignition and smooth combustion in this chamber. When the pressure difference between the two combustion chambers cannot hold the control valve open against the valve spring, this valve closes. The control valve is opened again during the expansion stroke, when the gas pressure in open combustion chamber has correspondingly decreased; as a result, hot gases from the separate combustion chamber are ejected again into the open combustion chamber. The control valve closes when the pressure difference between the two combustion chambers cannot hold the valve open against the valve spring. Further, the gas expansion and the gas exchange process occurs as usual in internal combustion engines.

The manner in which the invention is carried into practice, the methods of operation, and further objects and advantages of the invention are set forth in the following specification, wherein the invention is described in further detail by reference to the accompanying drawing.

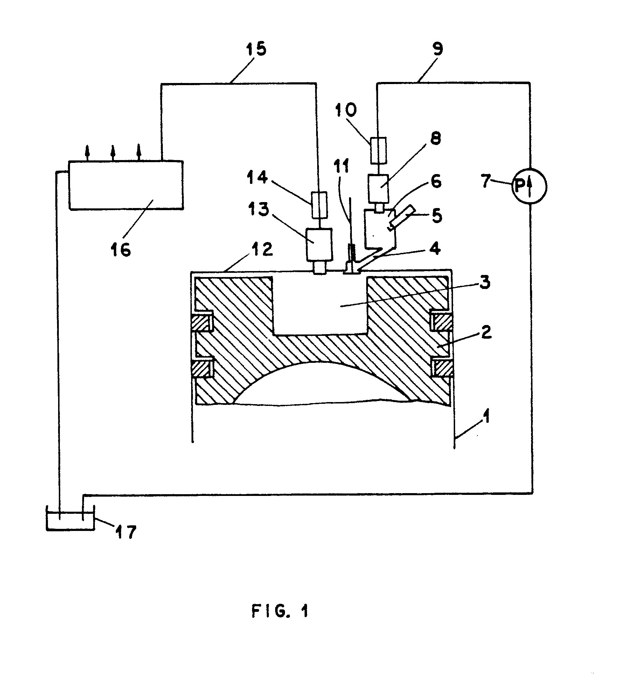

Fig. 1 shows in a schematic way the main components of one cylinder of the reciprocating internal combustion engine with large fuel tolerance, according to the invention.

The engine is an internal combustion engine provided with an open combustion chamber and a separate combustion chamber which are connected to each other by means. As an example Fig. 1 shows in a schematic way some of the main components of one cylinder of a reciprocating internal combustion engine, which includes the open combustion chamber 3, and a separate combustion chamber 6, situated in cylinder head or in other convenient location. The two combustion chambers are connected by channel 4 controlled by valve 11 which opens towards chamber 3. This is valve is actuated by means which open or close the valve at selected moments of the working cycle. These means can be of any known type; they are not represented in Fig. 1.

Valve 11 can also operate as a pressure relief valve. In this mode of operation valve 11 is opened/ closed when the force generated on the valve by the gas pressure of combustion chambers 3 and 6 is greater/smaller than the force of the valve spring. To attenuate the shocks which occur in this mode of operation of valve 11 at the opening and closing of the valve, corresponding means are provided. The lift of valve 11 is limited to a distance slightly greater than that ensured by the means for valve actuation, to prevent unnecessary valve travel when valve 11 operates as a pressure relief valve. Means for shock attenuation and valve lift limitation are known from technical literature; they are not represented in Fig. 1.

The separate combustion chamber 6 is provided with the spark plug 5, connected to a spark ignition system, which is not represented in Fig. 1. A part of the fuel charge of the cycle is delivered into the separate combustion chamber 6 by nozzle 8, connected to injection pump 7 via line 9. Another nozzle 13, connected to injection pump 16 via line 15, delivers the remaining part of the fuel charge of the cycle into open combustion chamber 3. Lines 9 and 15 are provided with heaters 10 and 14, respectively. The pumps 7 and 16 are connected to the fuel tank 17. The other usual components of the engine are not shown in Fig. 1.

· The engine operates as follows. In a selected moment situated between late expansion stroke and early compression stroke, nozzle 8 starts to deliver a metered amount of fuel into separate combustion chamber 6. Since the fuel injection is achieved when this chamber is filled with residual combustion gases, a fast fuel vaporization occurs, whatever the fuel characteristics are; at the same time no significant chemical reactions develop in this chamber, because of the low oxygen content of residual combustion gases of chamber 6. To activate the fuel vaporization, the fuel can be heated by the heater 10. Valve 11 is opened before, during, or after fuel injection into separate combustion chamber 6. Various correlations between the timing of valve 11 and the timing of fuel injection into separate chamber 6 are analyzed later in this specification.

During the compression stroke a part of the gas charge of cylinder 1 flows into separate combustion chamber 6 as long as valve 11 is open. The incoming gas, which is mostly air, mixes with the fuel and the residual combustion gases of this chamber. A homogeneous mixture is achieved because of turbulent flow, and since the fuel previously injected into separate combustion chamber 6 is already vaporized. Valve 11 is closed when the parameters of this mixture are high enough for ensuring a combustion pressure in separate combustion chamber 6 higher than the compression pressure in open chamber 3, but low enough for preventing uncontrolled combustion in chamber 6. Further, the compression process continues only in engine cylinder.

When combustion shall start, the fuel-air mixture of separate combustion chamber 6 is spark ignited. A combustion of flame propagation type occurs, since this mixture is homogeneous. As the combustion proceeds, the gas pressure in chamber 6 increases. When the force generated on valve 11 by the gas pressure of separate combustion chamber 6 is greater than the sum between the force generated on valve 11 by the gas pressure of open combustion chamber 3 and the force of valve spring, valve 11 is opened and burning gases are ejected into open combustion chamber 3. The fuel charge of open combustion chamber 3 is injected into the incoming burning gases. Due to high temperature and high concentration of reactive particles of these gases, a fast ignition and smooth combustion occur, whatever the fuel characteristics may be. To improve the fuel atomization and vaporization, the fuel can be heated by heater 14, prior to its injection.

The combustion progression in open combustion chamber 3 increases the gas pressure in this chamber. Therefore the force which holds the valve 11 open decreases. When this force becomes smaller than the force of valve spring, the valve is closed. With a corresponding valve spring the closing of valve 11 can occur when the pressure in separate combustion chamber 6 is still higher than the pressure in open combustion chamber 3, which avoids any gas flow from open combustion chamber into separate combustion chamber. Further, combustion in chamber 3 develops like in a direct injection diesel engine, but in a much better environment, as a result of the initial strong support brought by the burning gases ejected from separate chamber 6.

During the expansion stroke valve 11 opens again, when the pressure in open combustion chamber 3 has correspondingly decreased. As a result hot combustion gases are discharged from separate combustion chamber 6 into open combustion chamber 3. This process ends when the pressure difference between chambers 6 and 3 cannot hold open the valve 11 against the valve spring. Further, gas expansion and gas exchange process occur as usual in internal combustion engines.

The closing of valve 11 during compression stroke acts as a sudden increase of compression ratio in cylinder 11, which increases the compression pressure as compared with that of the engine without valve 11. The higher the ratio between the volume of separate combustion chamber 6 and the volume of open combustion chamber 3, the higher the compression pressure. The same effect has an earlier closing of valve 11 during compression stroke. The last circumference can be used for ensuring an easy cold start of the engine. However, in normal operation the compression pressure in open combustion chamber 3 may be too high. A convenient compression pressure can be achieved by decreasing the nominal compression ratio, or/and the ratio between the volume of separate combustion chamber 6 and the volume of open combustion chamber 3.

An important effect on engine operation has the opening timing of valve 11 achieved by the means for valve actuation, and the timing of fuel injection into separate combustion chamber 6. The opening timing of valve 11 determines whether or not additional combustion gases are recirculated, and whether or not a part of the fuel injected into separate combustion chamber 6 is transferred into open combustion chamber 3. The timing of fuel injection into separate combustion chamber 6 determines the fuel residence time in this chamber, therefore the degree of fuel vaporization.

Several methods of engine operation, resulting from various combinations of the above mentioned parameters, are possible. Among these methods, which form a part of the present invention, some are further described in more details, as examples illustrating the implications on engine operation.

1. The opening of valve 11 starts in a selected moment situated between late expansion stroke and late exhaust stroke, and fuel injection into separate combustion chamber 6 starts in a selected moment situated between early intake stroke and early compression stroke. This method of engine operation allows the final discharge of separate combustion chamber 6 in a part of the cycle when the eventual unburned components of this chamber can burn in engine cylinder or in the exhaust manifold. The method prevents a significant fuel transfer from separate combustion chamber 6 into open combustion chamber 3, as well as the recirculation of additional combustion gases.

2. The opening of valve 11 starts in a selected moment situated between early intake stroke and early compression stroke, and fuel injection into separate combustion chamber 6 occurs after the opening of valve 11. This method of engine operation recirculates all eventual unburned components of separate combustion chamber 6. It recirculates in engine cylinder the combustion gases discharged from separate combustion chamber 6, but prevents a significant fuel transfer between the two combustion chambers, and avoids an early air penetration into separate combustion chamber which can occur when the engine is supercharged and valve 11 is opened during exhaust stroke or earlier.

3. Fuel injection into separate combustion chamber 6 starts in a selected moment situated between late expansion stroke and early exhaust stroke, and the opening of valve 11 starts in a selected moment of the exhaust stroke, after the end of fuel injection into separate combustion chamber 6. This method of engine operation achieves a fuel transfer from separate combustion chamber 6 into the exhaust manifold, which can be useful for the cleaning of particulate trap oxidizer.

4. Fuel injection into separate combustion chamber 6 starts in a selected moment situated between late expansion stroke and early compression stroke, and the opening of valve 11 starts in a selected moment after the end of fuel injection into separate combustion chamber 6 but not before early intake stroke. This method of engine operation recirculates all eventual unburned components of separate combustion chamber 6. It recirculates in engine cylinder the combustion gases discharged from separate combustion chamber 6. A part of the fuel charge of separate combustion chamber 6 is transferred into open combustion chamber 3 with the discharged gases, which can help combustion in this chamber in some operating regimes.

5. Valve 11 is permanently open, fuel injection into separate combustion chamber 6 starts in a selected moment between early intake stroke and early compression stroke, and spark timing is delayed towards late compression stroke. This method of engine operation ensures an easy cold start, since the compression in separate combustion chamber is increased, and therefore the temperature and pressure in this chamber at the time of spark release are much higher than in normal operation of the engine. Consequently, an ignitable fuel-air mixture is achieved even in a cold engine.

6. Valve 11 is closed at a selected moment of early compression stroke, and no fuel is injected into separate combustion chamber 6. In these conditions the engine operates like a regular direct injection diesel engine, but at substantially higher compression ratio. Therefore this method of engine operation also achieves an easy cold start of the engine.

To take advantage of the methods of engine operation, the means which actuate valve 11 shall have the capability to modify the valve timing. The most advantageous is an independent variation of the opening timing and the closing timing. Several methods for achieving variable valve timing are known from patent literature.

The injection system of separate combustion chamber 6 shall have the possibility to variate the injection timing in a broad range. This flexibility is necessary for achieving the methods of engine operation previously described, as well as a fuel delivery which takes into account the characteristics of the used fuel. Because the fuel injection into separate chamber mostly occurs when the gas pressure in this chamber is low, a system of the type for gasoline injection in conventional spark ignition engines can be used, since this type achieves a large variation of injection timing. Additionally, this injection system is easy electronically programmable.

The internal combustion engine, according to the invention, has significant advantages as compared with the existing fuel tolerant engines operating with one fuel at a time. The injection of the fuel charge of separate combustion chamber into combustion gases and relatively long time before spark release ensures a complete fuel vaporization, whatever the fuel volatility and viscosity may be. The equivalence ratio of the fuel-air mixture can differ between the two combustion chambers; this circumstance allows the use in separate combustion chamber of that mixture which is most convenient for spark ignition. The limitation of compression in open combustion chamber avoids uncontrolled combustion in this chamber. Before spark release the separate combustion chamber contains a homogeneous fuel-air mixture, which ensures a reliable spark ignition and favorable combustion development. The burning gases ejected from the separate combustion chamber achieves ignition and smooth combustion in open chamber, whatever the fuel characteristics may be. The second discharge of hot gases into open combustion chamber improves the last part of combustion in this chamber, and intensifies the burning of particulates generated during combustion process. The engine has an easy cold start, and a normal operation at relatively low compression ratio.

**Claims**

1. An internal combustion engine including at least one cylinder (1), each cylinder being provided with an open combustion chamber (3) and a separate combustion chamber (6), the two combustion chambers being connected by a passage (4), each of said combustion chambers being provided with its own fuel injection system (13—16; 7—10), which can modify the timing and the amount of fuel injected into the respective combustion chamber, said separate combustion chamber (6) being also provided with a spark plug (5) connected to a spark ignition system which can modify the spark timing, the passage (4) between the two combustion chambers being opened and closed by a control valve (11) provided with one or several springs whose force acts against valve opening, characterised in that each of said injection systems has means for fuel heating (14, 10) prior to fuel injection, said passage (4) between the two combustion chambers being opened and closed several times during the engine working cycle, said control valve (11) opening towards said open chamber (3) whereby one of said opening/closing of the control valve (11) is achieved by means which actuate said control valve in selected moments situated between late expansion stroke and late compression stroke, the other openings/closings of said control valve (11) being achieved by the pressure difference between the two combustion chambers, means being further provided which limits the maximum lift of the control valve to a distance slightly greater than the lift ensured by said means for valve actuation.

2. An internal combustion engine as defined in Claim 1, characterized in that it includes means for the attenuation of the shocks which may occur at the opening/closing of the control valve (11) when the motion of this valve is achieved by the pressure difference between said combustion chambers.

3. An internal combustion engine as defined in Claims 1 or 2, characterized in that it includes means which modify independently the opening timing and the closing timing of the control valve (11).

4. An internal combustion engine as defined in any of Claims 1 to 3 characterized in that all or some of the following equipment: the fuel injection system (13—16) of open combustion chamber (3), the fuel injection system (7—10) of separate combustion chamber (6), the means for achieving variable valve timing of the control valve (11), and the spark ignition system of the separated combustion chamber, are electronically programmed.

5. Method of operating an internal combustion engine as defined in any of Claims 1 to 4 characterized by the opening of said control valve (11) by said means for valve actuation in a selected moment situated between late expansion stroke and early compression stroke, injection of the fuel charge of separate combustion chamber (6) starting in a selected moment situated between late expansion stroke and early compression stroke so that the fuel injection into separate combustion chamber (6) occurs before, during, or after the opening of the control valve (11) achieved by the means for valve actuation, closing of the control valve (11) by the means for valve actuation in a selected moment of compression stroke, spark ignition and combustion of the fuel-air mixture of separate combustion chamber (6), opening of the control valve (11) by the pressure difference between the two combustion chambers (3, 6), ejection of burning gases from separate combustion chamber (6) into open combustion chamber (3) through the passage (4) between the two combustion chambers, injection of the fuel charge of open combustion chamber (3) into the burning gases ejected from separate combustion chamber (6), ignition and combustion of the fuel charge of open combustion chamber (3), closing of the control valve (11) due to the pressure increase in open combustion chamber (3) generated by the combustion progression in this chamber, opening of the control valve (11) during the expansion stroke due to the pressure decrease in open combustion chamber (3) generated by gas expansion, a second ejection of hot gases from separate combustion chamber (6) into open combustion chamber (3), closing of the control valve (11) when the pressure difference between the combustion chambers cannot hold the control valve open against the valve spring, completion of the expansion, and gas exchange process achieved as usual in internal combustion engines.

6. Method of operating an internal combustion engine as defined in Claim 5, characterized by the opening of the control valve (11), achieved by the means for valve actuation, in a selected moment situated between late expansion stroke and late exhaust stroke, and the start of the fuel injection into separate combustion chamber (6) in a selected moment situated between early intake stroke and early compression stroke.

7. Method of operating an internal combustion engine as defined in Claim 5, characterized by the opening of the control valve (11), achieved by the means for valve actuation, in a selected moment situated between early intake stroke and early compression stroke, the fuel injection into the separate combustion chamber (6) occurring after the opening of the control valve (11).

8. Method of operating an internal combustion engine as defined in Claim 5, characterized by the start of fuel injection into separate combustion chamber (6) in a selected moment between late expansion stroke and early exhaust stroke, and the opening of the control valve (11), achieved by the means for valve actuation, in a selected moment of the exhaust stroke, after the end of fuel injection into separate combustion chamber (6).

9. Method of operating an internal combustion engine as defined in Claim 5, characterized by the start of fuel injection into separate combustion chamber (6) in a selected moment between late expansion stroke and early compression stroke, and the opening of the control valve (11), achieved by the means for valve actuation, in a selected moment after the end of fuel injection into separate combustion chamber (6), but not before early intake stroke.

10. Method of operating an internal combustion engine during the engine start, eventually during the engine warm-up, after which follows the methods of Claim 5 characterized by the open connection of the two combustion chambers (3, 6), the start of fuel injection into separate combustion chamber (6) in a selected moment situated between early intake stroke and early compression stroke, and the release of the electric sparks in separate combustion chamber (6) during late compression stroke.

11. Method of operating an internal combustion engine during the engine start, eventually during the engine warm-up, after which follows the method of Claim 5 characterized by the closing of the control valve (11), achieved by the means of valve actuation, in a selected moment of early compression stroke, the fuel injection into separate combustion chamber (6) being discontinued.

**Patentansprüche**

1. Ein Verbrennungsmotor mit mindestens einem Zylinder (1), wo jeder Zylinder einen Hauptbrennraum (3) und einen Nebenbrennraum (6) hat, die zwei Brennräume sind durch einen Durchgang (4) verbunden und jeder dieser Brennräume hat sein eigenes Treibstoff-Einspritzsystem (13—16; 7—10), welches den Einspritzbeginn und die Menge des Treibstoffes das in den entsprechenden Brennraum gespritzt wird ändern kann, der Nebenbrennraum (6) der auch mit einer Zündkerze (5) versehen ist, verbunden mir einer Zündanlage, die den Zündzeitpunkt abändern kann, der Durchgang (4) zwischen den zwei Brennräumen wird durch ein Kontrollventil (11) geöffnet und geschlossen, das eine oder mehrere Federn hat dessen Kraft gegen das Öffnen des Ventils wirkt, dadurch gekennzeichnet, dass jedes der genannten Einspritzsysteme, Mittel zur Erhitzung des Treibstoffes (14, 10) vor der Treibstoffeinspritzung enthält, der genannte Durchgang (4) zwischen den zwei Brennräumen, während des Arbeitszyklus des Motors mehrmals geöffnet und geschlossen wird, wobei das genannte Kontrollventil (11) sich in der Richtung des Hauptbrennraumes (3) öffnet, ein Öffnen/Schliessen des Kontrollventils (11) durch Mittel bewirkt wird, die das Kontrollventil zu bestimmten Zeitpunkten, die zwischen dem späten Expansionshub und dem späten Verdichtungshub liegen, antreiben, andere Öffnungen/Schliessungen des Kontrollventils (11) werden durch den Druckunterschied zwischen den beiden Brennräumen erzielt, wobei weiterhin andere Mittel vorgesehen sind, welche den maximalen Hub des Kontrollventils auf einen Abstand beschränken, der erwas grösser ist, als der Hub der durch besagte Mittel für den Antrieb des Ventils gewährleistet wird.

2. Ein Verbrennungsmotor nach Anspruch 1, dadurch gekennzeichnet, dass es Mittel für die Dämpfung der Stösse enthält, welche während des Öffnen/Schliessens des Kontrollventils (11) vorkommen können, wenn die Bewegung des Ventils durch den Druckunterschied zwischen den genannten Brennräumen erzielt wird.

3. Ein Verbrennungsmotor nach Anspruch 1 oder 2, dadurch gekennzeichnet, dass es Mittel enthält, welche unabhängig den Zeitpunkt der Öffnung und Schliessung des Kontrollventils (11) abändern.

4. Ein Verbrennungsmotor nach einem der Ansprüche 1 bis 3, dadurch gekennzeichnet, dass alle oder einige der folgenden Einrichtungen: das Treibstoffeinspritzsystem (13—16) des Hauptbrennraumes (3), das Treibstoffeinspritzsystem (7—10) des Nebenbrennraumes (6), die Mittel zur regulierbaren Zeiteinstellung des Kontrollventil (11), und die Zündanlage des Nebenbrennraumes, elektronisch programmiert sind.

5. Methode für die Betreibung eines Verbrennungsmotors nach einem der Ansprüche 1 bis 4, gekennzeichnet durch das Öffnen des genannten Kontrollventils (11) durch die genannten Ventilwirkungsmittel zu einem bestimmten Zeitpunkt, welcher zwischen dem späten Expansionshub und dem frühen Verdichtungshub liegt, Einspritzung der Treibstoffladung des Nebenbrennraumes (6), von einem bestimmten Zeitpunkt ausgehend, der zwischen dem späten Expansionshub und dem frühen Verdichtungshub liegt, so dass die Treibstoffeinspritzung in den Nebenbrennraum (6) vor, während oder nach dem Öffnen des Kontrollventils, durc die Ventilwirkungsmittel, und das Schliessen des Kontrollventils (11) durch die Ventilwirkungsmittel zu einem bestimmten Zeitpunkt des Verdichtungshubs geschieht, Zündung und Verbrennung der Treibstoff-Luft Mischung in dem Nebenbrennraum (6), Öffnung des Kontrollventils (11) durch den Druckunterschied zwischen den zwei Brennräumen (3, 6), Ausstossung der brennenden Gase aus dem Nebenbrennraum (6) in den Hauptbrennraum (3) durch den Durchgang (4) zwischen den zwei Brennräumen, Einspritzung der Treibstoffladung des Hauptbrennraums (3) in die brennenden Gase die aus dem Nebenbrennraum (6) ausgestossen werden, Zündung und Verbrennung der Treibstoffladung des Hauptbrennraumes (3), Schliessung des Kontrollventils (11), durch den erhöhten Druck in dem Hauptbrennraum (3), welcher durch den Verbrennungsweiterverlauf in diesem Raum verursacht wird, Öffnung des Kontrollventils (11) während des Expansionshubs infolge der Druckverminderung im Hauptbrennraum (3), welcher durch die Gasausdehnung verursacht wird, eine zweite Ausstossung von heissen Gasen aus dem Nebenbrennraum (6) in den Hauptbrennraum (3), Schliessung des Kontrollventils (11), wenn der Druckunterschied zwischen den Brennräumen das Kontrollventil nicht gegen die Ventilfeder offen halten kann, Vervollständigung der Ausdehnung und Ladungswechsel wird wie gewöhnlich in Verbrennungsmotoren erwirkt.

6. Methode für die Betreibung eines Verbrennungsmotors nach Anspruch 5, gekennzeichnet durch das Öffnen des Kontrollventils (11), welches durch Ventilwirkungsmittel erzielt wird, zu einem bestimmten Zeitpunkt, der zwischen dem späten Expansionshub und dem späten Auspuffhub liegt und dem Beginn der Treibstoffeinspritzung in den Nebenbrennraum (6), zu einem bestimmten Zeitpunkt zwischen dem frühen Saughub und dem frühen Verdichtungshub.

7. Methode für die Betreibung eines Verbrennungsmotors nach Anspruch 5, gekennzeichnet durch das Öffnen des Kontrollventils (11), welches durch Ventilwirkungsmittel erzielt wird, zu einem bestimmten Zeitpunkt, der zwischen dem frühen Saughub und frühem Verdichtungshub liegt, die Treibstoffeinspritzung in den Nebenbrennraum (6) findet nach dem Öffnen des Kontrollventils (11) statt.

8. Methode für die Betreibung eines Verbrennungsmotors nach Anspruch 5, gekennzeichnet durch den Beginn der Treibstoffeinspritzung in den Nebenbrennraum (6) zu einem bestimmten Zeitpunkt zwischen dem späten Expansionshub und dem frühen Auspuffhub, und das Öffnen des Kontrollventils (11), welches durch Ventilwirkungsmittel erwirkt wird, zu einem bestimmten Zeitpunkt des Auspuffhubs, nach Vervollständigung der Treibstoffeinspritzung in den Nebenbrennraum (6).

9. Methode für die Betreibung eines Verbrennungsmotors nach Anspruch 5, gekennzeichnet durch den Beginn der Treibstoffeinspritzung in den Nebenbrennraum (6) zu einem bestimmten Zeitpunkt zwischen spätem Expansionshub und frühem Verdichtungshub, und das Öffnen des Kontrollventils (11), welches durch Ventilwirkungsmittel erzielt wird, zu einem bestimmten Zeitpunkt nach Beendigung der Treibstoffeinspritzung in den Nebenbrennraum (6), aber nicht vor dem frühen Saughub.

10. Methode für die Betreibung eines Verbrennungsmotors während des Anlassens des Motors, schliesslich während der Erwärmung des Motors, worauf die Methoden in Anspruch 5 folgen, die sich kennzeichnen durch die offene Verbindung zwischen den zwei Brennräumen (3, 6), dem Beginn der Treibstoffeinspritzung in den Nebenbrennraum (6) zu einem bestimmten Zeitpunkt, zwischen dem frühen Saughub und dem frühen Verdichtungshub und der Auslösung elektrischer Funken in dem Nebenbrennraum (6), während des späten Verdichtungshubs.

11. Methode für die Betreibung eines Verbrennungsmotors während des Anlassens des Motors, schliesslich während der Erwärmung des Motors, worauf die Methoden in Anspruch 5 folgen, die sich kennzeichnen durch das Schliessen des Kontrollventils (11) durch Ventilwirkungsmittel, zu einem bestimmten Zeitpunkt des frühen Verdichtungshubs, wobei die Treibstoffeinspritzung in den Nebenbrennraum (6) unterbrochen wird.

**Revendications**

1. Moteur à combustion interne comprenant au moins un cylindre (1), chaque cylindre ayant une chambre de combustion ouverte (3) et une chambre de combustion séparée (6), les deux chambres de combustion étant connectées par un passage (4), chaque chambre de combustion ayant son propre système d'injection (13—16; 7—10), qui peut modifier le moment d'injection et la quantité du combustible injectée dans la chambre de combustion respective, la chambre de combustion separée (6) étant prévue avec une bougie (5) connectée à un système d'allumage électrique qui peut modifier le moment d'allumage, le passage (4) entre les deux chambres de combustion étant ouvert et fermé par une soupape de contrôle (11) prévue avec un ou plusieurs ressorts, la force des ressorts agissant contre l'ouverture de la soupape, caractérisé par ce que chaque système d'injection est prévu avec moyens de chauffage du combustible (14, 10) avant l'injection de celui-ci, le passage (4) entre les deux chambres de combustion étant ouvert et fermé plusieurs fois pendant le cycle moteur, la soupape de contrôle (11) s'ouvrant vers la chambre de combustion ouverte (3), une des ouvertures/fermetures de la soupape de contrôle (11) étant accomplie par des moyens qui actionnent la soupape de contrôle à certain moments situés entre la derniere partie de la course de détente et la dernière partie de la course de compression, les autres ouvertures/fermetures de la soupape de contrôle (11) etant accomplies par la différence de pression entre les deux chambres de combustion, des moyens étant aussi prévues pour limiter la course de la soupape de contrôle a une distance un peu plus grande que la course accompli par les moyens qui actionnent la soupape.

2. Moteur à combustion interne défini par la revendication 1, caractérisé par l'inclusion des moyens pour l'atténuation des chocs qui peuvent se produire à l'ouverture/fermeture de la soupape de contrôle (11) quand le mouvement de la soupape est accompli par la différence de pression entre les deux chambres de combustion.

3. Moteur à combustion interne défini par la revendication 1 ou 2, caractérisé par l'inclusion des moyens qui modifient indépendamment les moments d'ouvertures et de fermeture de la soupape de contrôle (11).

4. Moteur à combustion interne défini par la revendication 1, 2, ou 3, caractérisé par ce que tous ou quelque-uns des équipements suivants: le système d'injection (13—16) de la chambre de combustion ouverte (3), le système d'injection (7—10) de la chambre de combustion séparée (6), les moyens qui modifient indépendament les moments d'ouverture et de fermeture de la soupape de contrôle (11), ainsi que le système d'allumage électrique de la chambre de combustion séparée sont programmés électroniquement.

5. Méthode d'opération d'un moteur à combustion interne défini par la revendication 1, 2, 3 ou 4, caractérisée par l'ouverture de la soupape de contrôle (11), accomplie par les moyens qui actionent la soupape, à un certain moment situé entre la dernière partie de la course de détente et la première partie de la course de compression, l'injection de la charge de combustible de la chambre de combustion séparée (6) à partir d'un certain moment situé entre la dernière partie de la course de détente et la première partie de la course de compression, de sorte que l'injection du combustible dans la chambre de combustion séparée (6) se produit avant, pendant, ou après l'ouverture de la soupape de contrôle (11) accomplie par les moyens qui actionment la soupape, la fermeture de la soupape de contrôle (11), accomplie par les moyens qui actionment la soupape, à un certain moment pendant la course de compression, l'allumage électrique et la combustion du melange combustible-air de la chambre de combustion séparée (6), l'ouverture de la soupape de contrôle (11) par la différence de pression entre les deux chambres de combustion (3, 6), l'éjection du gaz en cours de combustion de la chambre de combustion séparée (6) dans la chambre de combustion ouverte (3) par le passage (4) entre les deux chambres de combustion, l'injection de la charge de combustible de la chambre de combustion ouverte (3) dans le gaz en cours de combustion éjecté de la chambre de combustion séparée (6), l'allumage et la combustion de la charge de combustible de la chambre de combustion ouverte (3), la fermeture de la soupape de contrôle (11) à la suite de l'augmentation de la pression dans la chambre de combustion ouverte (3) produite par la progression de la combustion dans cette chambre, l'ouverture de la soupape de contrôle (11) pendant la course de détente à la suite de la décroissance de la pression dans la chambre de combustion ouverte (3) produite par la détente du gaz, une seconde éjection du gaz tres chaud de la chambre de combustion séparée (6) dans la chambre de combustion ouverte (3), la fermeture de la soupape de contrôle (11) quand la différence de pression entre les chambres de combustion ne peut pas maintenir la soupape ouverte contre le ressort de la soupape, l'achèvement de la détente du gaz, et le changement du gaz accompli comme d'habitude dans les moteurs a combustion interne.

6. Méthode d'opération d'un moteur à combustion interne défini par la revendication 5, caractérisée par l'ouverture de la soupape de contrôle (11), accomplie par les moyens qui actionent la soupape, à un certain moment situe entre la dernière partie de la course de detente et la derniere partie de la course d'échappement, et l'injection du combustible dans la chambre de combustion séparée (6) à partir d'un certain moment situé entre la partie initiale de la course d'admission et la partie initiale de la course de compression.

7. Méthode d'opération d'un moteur à combustion interne défini par la revendication 5, caractérisée par l'ouverture de la soupape de contrôle (11), accomplie par les moyens qui actionent la soupape, à un certain moment situé entre la première partie de la course d'admission et la première partie de la course de compression, l'injection du combustible dans la chambre de combustion séparée (6) étant éffectué apres l'ouverture de la soupape de contrôle (11).

8. Méthode d'opération d'un moteur à combustion interne defini par la revendication 5, caractérisée par l'injection du combustible dans la chambre de combustion séparée (6) à partir d'un certain moment situé entre la dernière partie de la course de détente et la première partie de la course d'échappement, et l'ouverture de la soupape de contrôle (11), accomplie par les moyens qui actionent la soupape, à un certain moment de la course d'échappement, après le fin de l'injection du combustible dans la chambre de combustion séparée (6).

9. Méthode d'opération d'un moteur à combustion interne défini par la revendication 5, caractérisée par l'injection du combustible dans la chambre de combustion séparée (6) à partir d'un certain moment situé entre la dernière partie de la course de détente et la première partie de la course de compression, et l'ouverture de la soupape de contrôle (11), accomplie par les moyens qui actionent la soupape, à un certain moment après le fin de l'injection du combustible dans la chambre de combustion séparée (6), mais non pas avant la première partie de la course d'admission.

10. Méthode d'opération d'un moteur à combustion interne pendant la mise en marche du moteur, éventuellement pendant l'échaufement du moteur, après quoi il suit la methode de la revendication 5, caractérisée par l'ouverture permanente du passage entre les deux chambres de combustion (3, 6), l'injection du combustible dans la chambre de combustion séparée (6) à partir d'un certain moment situé entre la première partie de la course d'admission et la première partie de la course de compression, et le déclencement des étincelles électriques dans la chambre de combustion séparée (6) pendant la dernière partie de la course de compression.

11. Méthode d'opération d'un moteur à combustion interne pendant la mise en marche du moteur, éventuellement pendant l'échaufement du moteur, apres quoi il suit la methode de la revendication 5, caractérisée par la fermeture de la soupape de contrôle (11), accomplie par les moyens qui actionent la soupape, dans un certain moment de la première partie de la course de compression, l'injection du combustible dans la chambre de combustion séparée (6) étant discontinuée.

0 145 796

FIG. 1